# EUROPÄISCHE PATENTANMELDUNG

(11) **EP 1 380 616 A1**
(43) Veröffentlichungstag der Anmeldung: **14.01.2004**
(21) Anmeldenummer: 03015486.8
(22) Anmeldetag: 09.07.2003
(51) Int. Cl.: C08K 3/14, C09D 175/04, D06M 15/564

(54) **Wässerige Keramik-gefüllte Polymerzusammensetzungen zur Herstellung von Black-Out-Beschichtungen**

(30) Priorität: 10.07.2002 EP 02015362
(71) Anmelder: ROTTA GmbH, 68169 Mannheim (DE)
(72) Erfinder: Wittmann, Siegfried, 67592 Flörsheim-Dalsheim (DE); Rotta, Götz, 69469 Weinheim (DE)
(74) Vertreter: Kinzebach, Werner, Dr.

(57) **Zusammenfassung**

Die vorliegende Erfindung betrifft die Verwendung von wässrigen Keramik-gefüllten Polymerzusammensetzungen, enthaltend:
i. wenigstens ein in wässriger Phase dispergiertes, filmbildendes polymeres Bindemittel, das zu wenigstens 30 Gew.-%, bezogen auf das Gesamtgewicht des Bindemittels, wenigstens eines Polyurethans umfasst, und
ii. ein feinteiliges Siliciumcarbid-Pulver als Keramik-Bestandteil in einer Menge von 10 bis 150 Gew.-Teile, bezogen auf 100 Gew.Teile des polymeren Bindemittels (gerechnet als Feststoff),
zur Herstellung von Black-Out-Beschichtungen auf konventionellen textilen Materialien.

Die Erfindung betrifft auch ein Verfahren zur Herstellung von Black-Out-Textilien durch Beschichten eines konventionellen textilen Materials mit einer der vorstehend definierten wässrigen Polymerzusammensetzung in einer Auflage von wenigstens 70 g/m², gerechnet als Trockenauflage, und Verfestigen der Beschichtung.

## Beschreibung

Die vorliegende Erfindung betrifft die Verwendung von wässrigen Keramik-gefüllten Polymerzusammensetzungen zur Herstellung von Black-Out-Beschichtungen auf Textilien sowie ein Verfahren zur Herstellung von Black-Out-Textilien, bei dem man durch Aufbringen einer wässrigen Keramik-gefüllten Polymerzusammensetzung auf einen konventionellen textilen Träger eine Black-Out-Beschichtung herstellt und diese anschliessend verfestigt.

Unter Black-Out-Textilien versteht man Textilien, die für sichtbares Licht vollständig undurchlässig sind. Black-Out-Textilien werden in der Regel als Vorhänge, als Lamellen oder in Form von Rollos konfektioniert. Sie ermöglichen aufgrund ihrer Undurchlässigkeit für sichtbares Licht ein effektive Abdunkeln von Räumen mit Tageslichtzutritt und verhindern umgekehrt unerwünschte Einblicke in beleuchtete Räume. Sie weisen üblicherweise eine auf einen konventionellen textilen Träger aufgebrachte Black-Out-Beschichtung auf, welche die Lichtundurchlässigkeit bewirkt.

An die Lichtundurchlässigkeit von Blackout-Textilien werden strenge Anforderungen gestellt. So darf eine unmittelbar hinter einer Blackout-Textilie angeordnete Leuchtquelle (≥ 2000 Lux) nicht mehr als Leuchtquelle wahrnehmbar seine. Eine unzureichende Lichtundurchlässigkeit liegt bereits dann vor, wenn bei eingeschalteter Lichtquelle aufgrund von Fehlstellen in der Beschichtung feine Leuchtpunkte wahrgenommen werden können.

Zur Gewährleistung einer ausreichenden Lichtdichtigkeit der Black-Out-Textilie war es bislang erforderlich, auf einen konventionellen textilen Träger eine Beschichtung in wenigstens drei Strichen, umfassend einen ersten Polymerstrich, einen zweiten polymergebundenen Rußstrich und einen dritten Polymerstrich, aufzubringen (Siehe H.K. Rouette, Lexikon der Textilveredelung, Laumann-Verlag, Dülmen 1995, S. 238). Dieses Verfahren ist aufgrund der Anzahl der erforderlichen Striche aufwendig. Zudem erhält man auf diese Weise einen hohen Anteil an Ware mit minderer Qualität (2. Wahl). Der Anteil an 2. Wahl liegt in der Regel bei 20 bis 25 %.

Aus der JP 2000212503 ist eine Zusammensetzung für die Herstellung von Black-Out-Beschichtungen bekannt, die Ruß, einen Füllstoff und eine Harzmischung in Form einer wässrigen Dispersion, umfassend ein Acrylat-Dispersion und eine Polyurethandispersion enthält. Auch hier ist die Black-Out-Beschichtung aus drei Schichten aufgebaut und weist die oben angegebenen Nachteile auf.

Der vorliegenden Erfindung liegt somit die Aufgabe zugrunde, ein Verfahren zur Herstellung von Black-Out-Textilien bereitzustellen, dass technisch weniger aufwendig ist und insbesondere weniger Ausschuss liefert. Außerdem sollte die Beschichtung mechanisch stabil sein und die mit der Beschichtung versehene Textilie ein akzeptables Aussehen aufweisen.

Die europäische Patentanmeldung EP-A 1199400 beschreibt wässrige Keramik-gefüllte Beschichtungszusammensetzungen für Textilien, die als Bindemittel ein Polyurethan in Form einer wässrigen Dispersion und wenigstens ein feinteiliges keramisches Pulver, z.B. Siliciumcarbid, enthält. Die Zusammensetzung wird für die Herstellung von abriebfesten Beschichtungen auf Textilien eingesetzt, die starken mechanischen Belastungen ausgesetzt sind, wie Arbeitsschutzbekleidung, Motoradbekleidung, oder als Grundstrich für technische Artikel wie Planen und Transportbänder.

Es wurde überraschenderweise gefunden, dass wässrigen Keramik-gefüllte Polymerzusammensetzungen, enthaltend:
i. wenigstens ein in wässriger Phase dispergiertes, filmbildendes polymeres Bindemittel, das zu wenigstens 30 Gew.-%, bezogen auf das Gesamtgewicht des Bindemittels, wenigstens eines Polyurethans umfasst, und
ii. ein feinteiliges Siliciumcarbid-Pulver als Keramik-Bestandteil in einer Menge von 10 bis 150 Gew.-Teile, bezogen auf 100 Gew.-Teile des polymeren Bindemittels (gerechnet als Feststoff),
zur Herstellung von Black-Out-Beschichtungen auf konventionellen textilen Materialien geeignet sind. Überraschenderweise reicht bereits ein Strich aus, um die für Black-Out-Textilien geforderte Lichtundurchlässigkeit des beschichteten textilen Materials zu erreichen, so dass auf den im Stand der Technik vorgesehenen Ruß-Strich verzichtet werden kann. Zur Erreichung der geforderten Lichtdichtigkeit ist es in der Regel erforderlich, die Zusammensetzungen in einer Trockenauflage von wenigstens 70 g/m² auf das textile Material aufzubringen.

Die Erfindung betrifft somit die Verwendung dieser wässrigen Polymerzusammensetzungen zur Herstellung von Black-Out-Beschichtungen auf konventionellen textilen Materialien. Die Erfindung betrifft auch ein Verfahren zur Herstellung von Black-Out-Textilien durch Beschichten eines konventionellen textilen Materials mit einer der vorstehend definierten wässrigen Polymerzusammensetzung in einer Auflage von wenigstens 70 g/m², gerechnet als Trockenauflage, und Verfestigen der Beschichtung.

Der Begriff Black-Out-Textilie umfasst hier und im Folgenden sowohl konfektionierte als auch nicht konfektionierte Textilien.

Eine Textilie wird üblicherweise dann als lichtundurchlässig bezeichnet, wenn eine Leuchtquelle mit einer Lichtstärke von 2000 Lux, die sich unmittelbar hinter der Textilie befindet, von einer Testperson nicht wahrgenommen wird. Als Leuchtquelle dient dabei in der Regel eine handelsüblicher Halogenstrahler mit einer stabförmigen Halogenbirne (500 Watt, 220 V), die in einem üblichen Strahler-Gehäuse mit flächiger Glasscheibe und Reflektor angeordnet ist. Der Abstand der Halogenbirne zur Glasfläche beträgt dabei weniger als 10 cm. Zum Test der Lichtundurchlässigkeit wird der Strahler mit der Glasfläche unmittelbar gegen das zu testenden Gewebe gehalten. Das Gewebe erfüllt nur dann die für Blackout-Textilien geforderte Lichtundurchlässigkeit, wenn unter diesen Bedingungen von einer Testperson keine Leuchtpunkte wahrgenommen werden.

Das filmbildende polymere Bindemittel liegt in den erfindungsgemäßen wässrigen Zusammensetzung in Form feinteiliger dispergierter Polymerpartikel vor. Das als keramischer Bestandteil verwendete, feinteilige Siliciumcarbid-Pulver liegt ebenfalls in Form von dispergierten SiC-Partikeln in der wässrigen Zusammensetzung vor. Beim Trocknen der wässrigen Zusammensetzung bilden die Polymerparikel einen kohärenten polymeren Film, der die in der Zusammensetzung enthaltenen Siliciumcarbid-Partikel auf dem textilen Gewebe fixiert. Durch das Zusammenwirken von Bindemittel und Siliciumcarbid bildet sich dabei eine besonders lichtundurchlässige Schicht auf der Textilie. Diese weist überdies die gewünschte mechnische Festigkeit auf.

Zur Erreichung des günstigen Eigenschaftsprofils der Black-Out-Beschichtung ist es von Vorteil, wenn der Anteil an Polyurethan im polymeren Bindemittel wenigstens 80 Gew.-%, insbesondere wenigstens 90 Gew.-% beträgt und besonders bevorzugt das Polyurethan alleiniger Bestandteil des polymeren Bindemittels ist. In einer anderen Ausführungsform umfasst das polymere Bindemittel eine Mischung aus wenigstens einem Polyurethan in einer Menge von 30 bis < 80 Gew.-%, insbesondere 40 bis 80 Gew.-% und wenigstens ein Cobindemittel auf Basis eines wässrigen Emulsionspolymerisats ethylenisch ungesättigter Monomere in einer Menge von 20 bis 70 Gew.-%, insbesondere 20 bis 60 Gew.-%, jeweils bezogen auf das Gesamtgewicht der Polymerbestandteile des polymeren Bindemittels.

Vorzugsweise enthalten die wässrigen Zusammensetzungen das feinteilige Siliciumcarbid in einer Menge von 20 bis 120 Gew.-Teilen, insbesondere 40 bis 120 Gew.-Teilen, bezogen auf 100 Gew.-Teile polymere Bindemittelbestandteile. Dies entspricht einem Gehalt an Siliciumcarbid von 5 bis 50 Gew.-%, vorzugsweise 8 bis 40 Gew.-%, insbesondere 10 bis 35 Gew.-% bezogen auf das Gesamtgewicht der Zusammensetzung. Bei dem verwendeten Siliciumcarbid handelt es sich vorzugsweise um die kubische Modifikation. Das Siliciumcarbid weist in der Regel eine BET-Oberfläche (nach DIN 66131) im Bereich von 1 bis 50 m²/g, insbesondere von 1 bis 30 m²/g und ganz besonders bevorzugt von 5 bis 20 m²/g auf.

Die Partikel des erfindungsgemäß verwendeten Silciumcarbid-Pulvers weisen vorzugsweies Teilchengrößen im Bereich von 0,5 bis 20 µm auf. Bei dieser Angabe handelt es sich um Werte, die wenigstens 90 Gew.-% der Siliciumcarbidpartikel einer Probe aufweisen und die in an sich bekannter Weise durch Sieblinien ermittelt werden.

Als Polyurethan-Bindemittel kommen grundsätzlich alle wässrigen Polyurethan-Dispersionen in Betracht, die beim Trocknen, gegebenenfalls unter Anwendung erhöhter Temperatur, filmbildend sind. Unter filmbildenden Polymerdispersionen versteht der Fachmann solche Polymerdispersionen, deren Polymerteilchen beim Trocknen einer dünnen Schicht der Dispersion einen kohärenten, d.h. mehr oder weniger geschlossenen Polymerfilm bilden. Sie weisen in der Regel eine Glasübergangstemperatur T_{G} im Bereich von -40 bis +100 °C, vorzugsweise -30 bis +60 °C und insbesondere im Bereich von -20 bis + 40 °C auf.

Wässrige, für die erfindungsgemäßen Zusammensetzungen geeignete Polyurethan-Dispersionen sind für die Beschichtung von Textilien bekannt (siehe z.B. J. Hemmrich, Int. Text. Bull. 39, 1993, Nr.2, S. 53-56; "Wässrige Polyurethan-Beschichtungssysteme" Chemiefasern/Textilind. 39 91 (1989) T149, T150; W. Schröer, Textilveredelung 22, 1987, S. 459-467) und im Handel erhältlich, z.B. unter den Handelsbezeichnungen Alberdingk ® der Fa. Alberdingk, Impranil ® der Fa. BAYER AG, Permutex ® der Fa. Stahl, Waalwijk, Niederlande, der Fa. BASF Aktiengesellschaft oder können nach bekannten Verfahren hergestellt werden, wie sie beispielsweise in "Herstellverfahren für Polyurethane" in Houben-Weyl, "Methoden der organischen Chemie", Band E 20/Makromolekulare Stoffe, S. 1587, D. Dietrich et al., Angew. Chem. 82 (1970), S. 53 ff., Angew. Makrom. Chem. 76, 1972, 85 ff. und Angew. Makrom. Chem. 98, 1981, 133-165, Progress in Organic Coatings, 9, 1981, S. 281-240, bzw. Römpp Chemielexikon, 9. Auflage, Band 5, S. 3575 beschrieben werden.

Bei den Polyurethanen handelt es sich bekanntermaßen um Additionsprodukte aus wenigstens einer Polyisocyanat-Komponente und wenigstens einer Polyol-Komponente. Die Polyisocyanat-Komponente umfasst in der Regel wenigstens ein Diisocyanat. Darüber hinaus kann die IsocyanatKomponente auch höherfunktionelle Isocyanate, z. B. Triisocyante oder oligomere Isocyanate, die im Mittel mehr als 2 und vorzugsweise 3 oder mehr Isocyanatgruppen aufweisen, umfassen. Die Polyolkomponente umfasst in der Regel wenigstens ein Diol. Die Polyolkomponente kann auch höherfunktionelle Polyole oder oligomere Polyole mit im Mittel mehr als 2 OH-Gruppen, vorzugsweise 3, 4 und mehr OH-Gruppen umfassen.

Geeignete Diisocyanate sind aromatische Diisocyanate wie 2,4- und 2,6-Toluylendiisocyanat (TDI) und Isomerengemische davon, Tetramethylxylendiisocyanat (TMXDI), Xylendiisocyanat (XDI), Diphenylmethan-4,4'diisocyanat (MDI), sowie aliphatische und cycloaliphatische Diisocyanate, wie Dicylohexylmethan-4,4'-diisocyanat (H₁₂MDI), Tetramethylendiisocyanat, Hexamethylendiisocyanat (HMDI), Isophorondiisocyanat (IP-DI), Trimethylhexamethylendiisocyanat sowie Gemische davon. Zu den bevorzugten Diisocyanaten zählen Hexamethylendiisocyanat (HMDI) und Isophorondiisocyanat. Beispiele für höherfunktionelle Isocyanate sind Triisocyanate wie Triphenylmethan-4, 4', 4' ' -triisocyanat, die partielle Kondensationsprodukte der obengenannten Diisocyanate wie die Cyanurate und Biurethe der vorgenannten Diisocyanate sowie Oligomere, die durch gezielte Reaktion von Diisocyanaten oder von semiblockierten Diisocyanaten mit Polyolen, welche im Mittel mehr als 2 und vorzugsweise wenigstens 3 OH-Gruppen je Molekül aufweisen, erhältlich sind.

Bevorzugte Polyisocyanate sind aliphatischer oder cycloaliphatischer Natur. Insbesondere sind Diisocyanate der allgemeinen Formel

OCN- (CH₂)ₙ-NCO

mit n = 2 bis 8, insbesondere 4 bis 6 bevorzugt. Der Anteil an Polyisocyanat-Komponente an den Bestandteilen, welche das Polyurethan bilden liegt in der Regel im Bereich von 5 bis 60 Gew.-%, insbesondere im Bereich von 10 bis 40 Gew.-%.

Als Polyolkomponente kommen grundsätzlich niedermolekulare Alkohole mit 2 oder mehr, z.B. 3 oder 4 OH-Gruppen sowie oligomere Polyole in Betracht, die im Mittel wenigstens 2, vorzugsweise 2 bis 4 und insbesondere 2 oder 3 OH-Gruppen aufweisen, welche insbesondere an ihren Termini angeordnet sind.

Geeignete niedermolekulare Alkohole sind insbesondere Glykole mit vorzugsweise 2 bis 25 Kohlenstoffatomen. Hierzu zählen 1,2-Ethandiol, 1,2-Propandiol, 1,3-Propandiol, 1,4-Butandiol, 1,5-Pentandiol, 1,6-Hexandiol, 1, 10-Decandiol, Diethylenglykol, Triethylenglykol, Dipropylenglykol, Tripropylenglykol, 2,2,4-Trimethylpentandiol-1,5, 2,2-Dimethylpropandiol-1,3, 1,4-Dimethylolcyclohexan, 1,6-Dimethylolcyclohexan, 2,2-Bis(4-hydroxyphenyl)-propan (Bisphenol A), 2,2-Bis(4-hydroxyphenyl)butan (Bisphenol B) oder 1,1-Bis(4-hydroxyphenyl)-3,3,5-trimethylcyclohexan (Bisphenol C).

Weitere mögliche Bestandteile der Polyol-Komponente sind dreiwertige (Triole) und höherwertige, niedermolekulare Alkohole. Sie weisen in der Regel 3 bis 25, vorzugsweise 3 bis 18 Kohlenstoffatome auf. Hierzu zählen Glycerin, Trimethylolethan, Trimethylolpropan, Erythrit, Pentaerythrit, Sorbit und deren Alkoxylate.

Beispiele für oligomere Polyole sind Polyesterpolyole, Polycarbonatpolyole und Polyetherpolyole. Das zahlenmittlere Molekulargewicht dieser Komponente liegt vorzugsweise im Bereich von 500 bis 20000 Dalton, vorzugsweise 1000 bis 10000 Dalton. Bevorzugt ist die oligomere Komponente aus aliphatischen Bausteinen aufgebaut.

Der Anteil oligomerer Polyole an den das Polyurethan bildenden Komponenten liegt in der Regel im Bereich von 10 bis 95 Gew. -%, vorzugsweise 20 bis 95 Gew.-% und insbesondere 25 bis 85 Gew.-% bezogen auf das Gesamtgewicht der das Polyurethan-bildenden Komponenten. Der Anteil an niedermolekularen Alkoholen beträgt in der Regel nicht mehr als 60 Gew.-% , z.B. 1 bis 60 Gew.-%, und häufig bis 30 Gew.-% oder bis 20 Gew. -%.

Unter Polyetherolen versteht man sowohl lineare als auch verzweigte Polyether, die pro Molekül im Mittel wenigstens 2, vorzugsweise an ihren Termini angeordnete Hydroxylgruppen aufweisen. Bevorzugt sind aliphatische Polyetherpolyole, d.h. Polyetherpolyole die aus aliphatischen und/oder cycloaliphatischen Bausteinen aufgebaut sind. In der Regel erhält man Polyetherpolyole durch Polymerisation von Alkylenoxiden mit 2 bis 4 Kohlenstoffatomen, gegebenenfalls mit einem Starter. Als Alkylenoxid seien beispielsweise Ethylenoxid, 1,2-Propylenoxid, 1,2- und 2,3-Butylenoxid, insbesondere Ethylenoxid und Propylenoxid genannt. Als Startermolekül kommen z. B. Wasser, niedermolekulare Dioder Polyole, z.B. die zuvor genannten Glykole, oligomere Alkohole, Polyetherole sowie Polyesterole in Betracht. Beispiele für geeignete Starter sind insbesondere Ethandiol, 1,2- und 1,3-Propandiol, Bisphenol A, Glycerin, Trimethylolpropan, Pentaerythrit und Sorbit. Polyetherpolyole mit nur zwei Hydroxyendgruppen erhält man bei der Verwendung von difunktionellen Startern wie Wasser, Ethylenglykol, Propylenglykol sowie bifunktionellen Oligoalkylenoxiden. Polyetherole sind ferner durch kationische Polymerisation von cyclischen Ethern, wie Tetrahydrofuran, zugänglich. Besonders bevorzugte Polyetherpolyole sind Polyetherdiole, hierunter besonders bevorzugt Polyethylenoxid, Polypropylenoxid sowie statistische und Blockcopolymere von Ethylenoxid mit Propylenoxid. Der Polymerisationsgrad der Polyetherole liegt in der Regel im Bereich von ca. 5 bis 200. Das zahlenmittlere Molekulargewicht der Polyethersequenz beträgt insbesondere 500 bis 5000 g/mol.

Unter Polyesterpolyolen versteht man sowohl lineare wie auch verzweigte Polyester mit wenigstens zwei, vorzugsweise endständigen OH-Gruppen. Ihr Molekulargewicht liegt insbesondere im Bereich von 800 bis 20000, speziell im Bereich von 1000 bis 10000 g/mol. Geeignete Polyesterole lassen sich z. B. durch Polykondensation aliphatischer, cycloaliphatischer und aromatischer Di-, Tri- und/oder Polycarbonsäuren bzw. esterbildender Derivate wie Anhydride oder Chloride mit den vorstehend erwähnten Di- und/oder Polyolen und/oder Polyetherolen herstellen, wobei die Alkohol-Komponente im Überschuss eingesetzt wird, d. h. das Molverhältnis von OH-Gruppen zu Säuregruppen beträgt mehr als 1:1, z. B. 1,1:1 bis 2:1. Geeignete Carbonsäuren sind z. B. aliphatische Dicarbonsäuren mit 2 bis 20 Kohlenstoffatomen, vorzugsweise 4 bis 15 Kohlenstoffatomen, beispielsweise Bernsteinsäure, Glutarsäure, Adipinsäure, Pimelinsäure, Korksäure, Sebacinsäure, Dodecandisäure, Cyclohexandicarbonsäure und aromatische Dicarbonsäuren wie Phthalsäure, Terephthalsäure und Isophthalsäure. Bevorzugt sind Polyesterdiole, die durch Kondensation von Dicarbonsäuren mit Diolen erhältlich sind. Polyesterpolyole können auch durch Polykondensation von Hydroxycarbonsäuren oder Lactonen mit den vorstehend genannten Di- bzw. Polyolen hergestellt werden. Geeignete Lactone sind beispielsweise solche mit 3 bis 20 Kohlenstoffatomen, wie α,α-Dimethyl-β-propiolacton, γ-Butyrolacton und ε-Caprolacton. Geeignete Hydroxycarbonsäuren sind α-Hydroxycarbonsäuren wie Glykolsäure, Milchsäure, Hydroxybuttersäure, Mandelsäure, die auch in Form ihrer Lactide vorliegen können oder β-Hydroxycarbonsäuren, γ-Hydroxycarbonsäuren, δ-Hydroxycarbonsäuren bzw. ω-Hydroxycarbonsäuren wie ω-Valeriansäure. Bevorzugt sind aliphatische Polyesterpolyole, d.h. die Bausteine, welche den Polyester bilden sind unter aliphatischen und cycloaliphatischen Bausteinen ausgewählt.

Unter Polycarbonatpolyolen versteht man solche Polycarbonate die pro Molekül im Mittel wenigstens 2, z.B. 2, 3, 4 oder 5, vorzugsweise an ihren Termini angeordnete Hydroxylgruppen aufweisen und die im wesentlichen, i.d.R. zu mehr als 80 Gew.-%, vorzufsweise mehr als 90 Gew.-%, aus Wiederholungseinheiten der allgemeinen Formel I 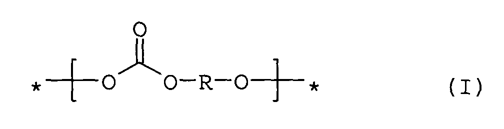 aufgebaut sind. In Formel I steht R für einen bivalenten organischen Rest, der in der Regel 2 bis 20 Kohlenstoffatome aufweist und durch ein oder mehrere z.B. 1, 2, 3 oder 4 nicht benachbarte Sauerstoffatome unterbrochen sein kann. R leitet sich vorzugsweise von einem aliphatischen oder cycloaliphatischen Diol ab. Derartige Polycarbonatpolyole werden üblicherweise als aliphatische Polycarbonatpolyole bezeichnet. Beispiele für geeignete aliphatische Diole sind lineare oder verzweigte Alkylenglykole mit 2 bis 20, vorzugsweise 2 bis 10 C-Atomen, z.B. lineare Alkylenglykole der Formel HO-(CH₂)ₙ-OH mit n = 2, 3, 4, 5, 6, 7 oder 8, vorzugsweise 3, 4, 5, 6 oder 7, Alkyl-substituierte α,ωAlkandiole mit 3 bis 20 C-Atomen wie Propylenglykol, Neopentylglykol und dergleichen, Oligomere wie Di- Tri- und Tetraethylenglycol, Di-, Tri- und Tetrapropylenglykol, HO-( (CH₂) ₄O) ₘH mit m = 2, 3, 4 oder 5, weiterhin cycloaliphatische Diole, z.B. Cylohexan-1,4-diol, 1,4-Bis(hydroxymethyl)cyclohexan oder 2,2-Bis(4-hydroxycyclohexyl)propan.

Das Polycarbonatpolyol kann auch eine oder mehrere, z.B. 1, 2 oder 3 Verzweigungstellen aufweisen, die sich von mehrwertigen Alkohlen, wie Glycerin, Trimethylolpropan, Pentaerythrit, oder von Zuckeralkoholen wie Sorbit ableiten. In Abhängigkeit von der Anzahl der Verzweigungsstellen und der Funktionalität des Alkohols weist das resultierende Polycarbonatpolyol eine Hydroxylfunktionalität > 2 auf.

Da die Polyurethane erfindungsgemäß in Form einer wässrigen Dispersion eingesetzt werden, weisen sie in der Regel polare funktionelle Gruppen auf, insbesondere ionogene und/oder ionischen Gruppen z. B. anionische bzw. anionogene Gruppen wie Carbonsäuregruppen, Sulfonsäuregruppen, Phosphonsäuregruppen, Phosphorsäuregruppen, die auch in ihrer SalzForm z. B. als Alkalimetall- und Ammoniumsalze vorliegen können; kationische bzw. kationogene Gruppen wie Aminogruppen, quaternäre Aminogruppen; und/oder neutrale wasserlösliche Gruppen wie Polyethergruppen, vorzugsweise Polyethylenoxid-Gruppen. Die Einführung dieser funktionellen Gruppen in das Polyurethan erfolgt in der Regel durch Verwendung entsprechend mit anionischen bzw. anionogenen oder kationischen bzw. kationogenen Gruppen substituierter Verbindungen, die wenigstens zwei gegenüber Isocyanat reaktive Gruppen aufweisen, oder im Falle der Polyethergruppen durch Verwendung von Polyetherpolyolen bei der Herstellung der Polyurethane. Der Anteil ionogener Bausteine, bezogen auf die Gesamtmenge der das Polyurethan bildenden Komponenten, liegt in der Regel im Bereich von 0,1 bis 25 Gew.-%, vorzugsweise 0,5 bis 20 Gew.-%. Hinsichtlich der Polyethergruppen gilt das oben gesagte. Je nach Art der ionogenen Komponente werden die Polyurethandispersionen auch als anionisch modifiziert bzw. anionenaktiv oder als kationisch modifiziert bzw. als kationenaktiv bezeichnet.

Geeignete Verbindungen mit polaren funktionellen Gruppen sind beispielsweise anionisch modifizierte Di- oder Polyole wie die Reaktionsprodukte von Dicarbonsäuren, die zusätzlich wenigstens eine Phosphonsäuregruppe, Sulfonsäuregruppe oder Sulfonatgruppe aufweisen, mit den vorstehend erwähnten Diolen. Die Dicarbonsäurekomponente umfasst z.B. Sulfobernsteinsäure, 4-Sulfophthalsäure, 5-Sulfoisophthalsäure, Sulfoterephthalsäure, 4-Sulphonaphthalin-2,7-dicarbonsäure, 5-(4-Sulfophenoxy)-terephthalsäure sowie die entsprechenden Salze. Zu den anionisch modifizierten Diolen zählen auch die Diesterdiole von Trioder Tetracarbonsäuren mit den zuvor genannten Diolen. Als Tri- oder Tetracarbonsäuren kommen beispielsweise 2-Phosphonobutan-1,2-4-tricarbonsäure, Citronensäure, 1,2,3-Propantricarbonsäure, 1,3,5-Benzoltricarbonsäure (Trimesinsäure), 1,2,4-Benzoltricarbonsäure (Trimellithsäure), 1,2,4,5-Benzoltetracarbonsäure (Pyromellithsäure). Zu den anionisch funktionalisierten Diolen zählen weiterhin lineare oder verzweigte Diole, die aliphatisch, cycloaliphatisch oder aromatisch sein können und die eine anionische funktionelle Gruppe tragen. Beispiele hierfür sind Dimethylolpropionsäure (Bis-2,2-(hydroxymethyl)-propionsäure), 2-Sulfo-1,4-butandiol, 2,5-Dimethyl-3-sulfo-2,5-hexandiol sowie deren Salze, insbesondere deren Natrium- und Kaliumsalze. Geeignete anionisch modifizierte Verbindungen sind weiterhin entsprechend substituierte Aminoalkohole und Diamine, z.B. Ethylendiamin-N-essigsäure, Ethylendiamin-N-propionsäure, N-(Sulfonatoethyl)-ethylendiamin, deren Salze, insbesondere deren Natrium- und Kaliumsalze.

Geeignete Verbindungen mit polaren funktionellen Gruppen sind weiterhin kationogen modifizierte Verbindungen. Unter kationogen versteht man hier und im Folgenden kationische Gruppen sowie Gruppen, die durch Modifizierung, z.B. Protonierung oder Alkylierung (Quaternisierung) in eine kationische Gruppe überführt werden können. Beispiele hierfür sind kationogen modifizierte Di- oder Polyole, kationogen modifizierte Di- oder Polyamine und Aminoalkohole wie N,N-Bis(hydroxy-C₂-C₈alkyl)amine, die am Stickstoff einen oder zwei weitere Reste, z.B. einen Arylrest, einen C₁-C₈-Alkylrest oder einen Aryl-C₁-C₈-alkylrest aufweisen können, weiterhin Hydroxy-C₂-C₈-alkylpiperazine Bis(hydroxy-C₂-C₈-alkyl)piperazine, N-(Amino-C₂-C₈-alkyl)piperazine und N,N'-Bis(amino-C₂-C₈-alkyl)piperazine und deren Quaternisierungsprodukte.

Bevorzugte Polyurethane sind solche, die aliphatische Polyetherketten (vorzugsweise linear oder einfach verzweigt), insbesondere Poly-C₂-C₄alkylenoxid-Ketten aufweisen. Diese sind naturgemäß dadurch erhältlich, dass man bei der Herstellung der Polyurethane die oben erwähnten aliphatischen Polyetherpolyole einsetzt. Der Anteil an Polyetherketten in Polyetherurethanen beträgt vorzugsweise 5 bis 80 Gew.-% und insbesondere 10 bis 50 Gew. -% der Gesamtmasse des Polyurethans.

Bevorzugte Polyurethane sind weiterhin aliphatische Polyesterurethane, d.h. Polyurethane, die aliphatische Polyesterketten (vorzugsweise linear oder einfach verzweigt) aufweisen und die dadurch erhältlich sind, dass man die obengenannten aliphatischen Polyesterpolyole bei der Herstellung der Polyurethane einsetzt. Der Anteil an Polyesterketten beträgt vorzugsweise 5 bis 80 Gew.-% und insbesondere 10 bis 70 Gew.-% der Gesamtmasse des Polyurethans.

Bevorzugte Polyurethane sind weiterhin aliphatische Polycarbonaturethane, d.h. Polyurethane, die aliphatische Polcarbonatketten (vorzugsweise linear oder einfach verzweigt) aufweisen und die dadurch erhältlich sind, dass man die obengenannten aliphatischen Polycarbonatpolyole bei der Herstellung der Polyurethane einsetzt. Der Anteil an Polycarbonatketten beträgt vorzugsweise 5 bis 80 Gew.-% und insbesondere 10 bis 70 Gew.-% der Gesamtmasse des Polyurethans.

Vorzugsweise handelt es bei dem erfindungsgemäß verwendeten Polyurethan um ein vernetzbares oder um ein selbstvernetzendes Polyurethan. Ein vernetzbares oder selbstvernetzendes Polyurethan weist reaktive funktionelle Gruppen auf, die eine nachträgliche Vernetzung des Polyurethans erlauben. Hierzu zählen insbesondere aliphatisch gebundene OH-Gruppen, NH-CH₂-OH-Gruppen, Carboxylat-Gruppen, Anhydrid-Gruppen, verkappte Isocyanatgruppen und Aminogruppen. Häufig wird man ein Polyurethan verwenden, dass noch freie OH-Gruppen als reaktive Gruppen aufweist. In der Regel beträgt der Anteil der reaktiven funktionellen Gruppen 0,1 bis 3 mol/kg Polymer. Die Vernetzung kann innerhalb des Polyurethans durch Reaktion komplementär-reaktiver funktioneller Gruppen bewirkt werden. In diesem Fall spricht man von einem selbstvernetzenden Polyurethan. Vorzugsweise bewirkt man die Vernetzung des Polyurethans durch Zugabe eines Vernetzers, der reaktive Gruppen aufweist, welche hinsichtlich ihrer Reaktivität zu den funktionellen Gruppen des Vernetzers komplementär sind. Geeignete Paare funktioneller Gruppen, die eine komplementäre Reaktivität aufweisen sind dem Fachmann bekannt. Beispiele für solche Paare sind OH/COOH, OH/NCO, NH₂/COOH, NH₂/NCO sowie M²⁺/COOH, wobei M²⁺ für ein zweiwertiges Metallion wie Zn²⁺, Ca²⁺, oder Mg²⁺ steht.

Beispiele für geeignete Vernetzer sind die nachstehend genannten Dioder Polyole; primäre oder sekundäre Diamine, vorzugsweise primäre Diamine, z.B. Alkylendiamine wie Hexamethylendiamin, Diethylentriamin, Triethylentetramin, Tetraethylenpentamin, N,N-Bis[(aminopropyl)amino]-ethan, 3,6-Dioxaoctandiamin, 3,7-Dioxanonandiamin, 3,6,9-Trioxaundecandiamin oder Jeffamine, (4,4' -Diaminodicyclohexyl)methan (4,4'-Diamino-3,3-dimethyldicyclohexyl)methan; Aminoalkohole wie Ethanolamin, Hydroxypropylamin; ethoxilierte Di- und Oligoamine; Dihydrazide von aliphatischen oder aromatischen Dicarbonsäuren wie Adipinsäuredihydrazid; Dialdehyde wie Glyoxal; teilweise oder vollständig O-methylierte Melamine, sowie Verbindungen oder Oligomere, die im Mittel 2 oder mehr, vorzugsweise 3 oder mehr Isocyanatgruppen oder reversibel blockierte Isocyanatgruppen aufweisen.

In diesem Fall wird das Mengenverhältnis von Vernetzer zu polymerem Bindemittel so bemessen, dass das Molverhältnis der reaktiven Gruppen im polymeren Bindemittel (Gesamtmenge der reaktiven Gruppen im Polyurethan und dem in gegebenenfalls vorhandenen Cobindemittel) zu den reaktiven Gruppen im Vernetzer in der Regel im Bereich von 1:10 bis 10:1 und vorzugsweise im Bereich von 3:1 bis 1:3 liegt. Üblicherweise liegt das Gewichtsverhältnis von polymeren Bindemittel (gerechnet als Feststoff) zu Vernetzer im Bereich von 100:1 bis 1:1 und insbesondere im Bereich von 50:1 bis 5:1.

In einer besonders bevorzugten Ausführungsform umfasst das polymere Bindemittel eine Mischung aus einem Hydroxylgruppen aufweisenden Polyurethan, insbesondere einem Polyether- oder Polyesterurethan, und einem Isocyanat-Vernetzer, der freie oder blockierte Isocyanat-Gruppen aufweist.

Selbstvernetzende Polymerdispersionen, die keine externen Vernetzer benötigen, weisen z.B. OH-Gruppen in Kombination mit Carboxyl- oder Anhydridgruppen, oder N-Methylolamid-Gruppen auf.

Als Cobindemittel können neben dem Polyurethan auch wässrige Dispersionen von Polymeren (Polymerlatics) auf Basis ethylenisch ungesättigter Monomere eingesetzt werden. Ihr Anteil beträgt vorzugsweise nicht mehr als 20 Gew.-%, bezogen auf die Gesamtmenge an Bindemittel, d.h. Polyurethan plus Cobindemittel. Geeignete Cobindemittel sind dem Fachmann bekannt, z.B. aus D. Distler "Wässrige Polymerdispersionen", Wiley-VCH, Weinheim, 1999, S. 171 ff. und dort zitierte Literatur.

Beispiele für geeignete Cobindemittel sind:
- Acrylatharze (Reinacrylate) ;
- Styrolacrylate;
- Styrol/Butadien-Copolymerisate;
- Polyvinylester, insbesondere Polyvinylacetate;
- Vinylester-Olefin-Copolymere, z.B. Vinylacetat/Ethylen-Copolymere; sowie
- Vinylester-Acrylat-Copolymere, z.B. Vinylacetat/Alkylacrylat-Copolymere sowie Vinylacetat/Alkylacrylat/Ethylen-Terpolymere.

Derartige Polymerdispersionen sind bekannt und im Handel erhältlich, z.B. unter den Bezeichnungen ACRONAL, STYROFAN, BUTOFAN (BASF-AG), MO-WILITH, MOWIPLUS, APPRETAN (Clariant), VINNAPAS, VINNOL (WACKER).

Die Glasübergangstemperatur der Cobindemittel liegt in der Regel im Bereich von -60 bis +60 °C, insbesondere im Bereich von -50 bis +30 °C und insbesondere im Bereich von -40 bis +20 °C. Ähnlich wie die Polyurethane können auch die Cobindemittel vernetzbare Gruppen aufweisen oder als selbstvernetzendes Bindemittel ausgestaltet sein. Bezüglich der Anzahl der vernetzend wirkenden Gruppen und dem Verhältnis von Vernetzer zur Gesamtmenge an Bindemittel gilt das oben gesagte.

Zusätzlich können die erfindungsgemäßen Zusammensetzungen auch Hohlkugeln enthalten. Diese können aus Glas, Wasserglas, Polyvinylidenfluorid oder Polystyrol bestehen, wobei solche aus Glas bevorzugt sind. Sie verbessern die Wärme-Isolierwirkung der Beschichtung. Üblicherweise enthält die erfindungsgemäße Zusammensetzung die Hohlkugeln in einer Menge von 0 bis 40 Gew.-Teilen, z. B. 5 bis 40 Gew.-Teilen, bezogen auf 100 Gew.-Teile polymere Bindemittelbestandteile. Ihr Außendurchmesser beträgt in der Regel 5 bis 200 µm, insbesondere 5 bis 150 µm und besonders bevorzugt 9 bis 90 µm. Die Wandstärke liegt z. B. im Bereich von 1 bis 20 µm. Geeignete Hohlkugeln werden z. B. unter dem Namen Sphericell 110 P 8 bzw. Q-Cell von der Firma Potters Europe, Kirchheim-Bolanden, vertrieben.

Gegebenenfalls enthalten die erfindungsgemäßen Zusammensetzungen Farbmittel. Bevorzugte Farbmittel sind anorganische und organische Pigmente. Diese sind im Handel als Pulver sowie als feste oder flüssige Pigmentpräparation erhältlich. Gegebenenfalls verwendet man als Farbmittel auch Pigmentgemische. Vorzugsweise haben die Pigmentteilchen eine Teilchengröße ≤ 5 µm. Der Pigmentanteil in den wässrigen Polymerzusammensetzungen wird in der Regel 20 Gew.-%, bezogen auf das Gesamtgewicht der Zusammensetzung, bzw. 50 Gew.-Teile auf 100 Gew.-Teile polymeres Bindemittel nicht überschreiten und liegt z. B. im Bereich von 2 bis 20 Gew.-%, bezogen auf das Gewicht der Zusammensetzung bzw. 5 bis 50 Gew.-Teile bezogen auf 100 Gew.-Teile Bindemittelpolymer. Beispiele für Pigmente sind insbesondere Weißpigmente wie TiO₂ und Farbpigmente auf Basis von Eisenoxid. Geeignet sind aber auch organische Pigmente.

In einer bevorzugten Ausführungsform der Erfindung enthält die wässrige Zusammensetzung wenigstens ein Flammschutzmittel. Geeignete Flammschutzmittel sind bespielsweise die dem Fachmann zu diesem Zweck bekannten halogen- oder phosphorhaltigen Verbindungen, mikroverkapselter roter Phosphor, Aluminiumoxidhydrat, Zinkborat, Ammoniumphosphate, Antimonoxid in Kombination mit Halogenquellen, Magnesiumhydroxid. Geeignete Flammschutzmittel sind z. B. aus Ullmann Encyclopedia of Industrial Chemistry, 5th ed. on CD-ROM "Flame Retardants" bekannt. Der Anteil an Flammschutzmittel in den Zusammensetzungen richtet sich in an sich bekannter Weise nach den erfindungsgemäß auszurüstenden textilen Trägern und beträgt in der Regel 2 bis 20 Gew.-Teile, insbesondere 5 bis 20 Gew.-Teile, bezogen auf 100 Gew.-Teile polymere Bindemittelbestandteile in den erfindungsgemäß zur Verwendung kommenden Zusammensetzungen.

Neben den vorgenannten Bestandteilen können die Beschichtungen übliche Hilfsmittel enthalten, wie sie bei konventionellen Beschichtungszusammensetzungen für Textilien eingesetzt werden. Art und Menge dieser Hilfsmittel richtet sich an sich bekannter Weise nach den zu beschichtenden Textilien und nach den eingesetzten Beschichtungsverfahren. Zu den Hilfsmitteln zählen UV-Stabilisatoren, Dispergierhilfsmittel, oberflächenaktive Substanzen, Verdicker, Entschäumer oder schaumbildende Mittel, Schaumstabilisatoren, Mittel zur Einstellung des pH-Wertes, Antioxidantien, Katalysatoren für die Nachvernetzung, übliche Mattierungsmittel wie Kieselsäurederivate, übliche Hydrophobiermittel sowie Konservierungsmittel, wobei diese Hilfsmittel-Klassen nicht in allen Fällen streng voneinander zu Trennen sind, z.B. im Falle von oberflächenaktiven Substanzen und Schaumbildnern bzw. Schaumstabilisatoren. In der Regel wird die Gesamtmenge der üblichen Hilfsmittel einen Wert von 10 Gew.-%, bezogen auf das Gesamtgewicht der Zusammensetzung, nicht überschreiten.

Mittel zur Einstellung des pH-Wertes sind die üblicherweise verwendeten anorganischen oder organischen Basen, beispielsweise Ammoniak, Alkalimetallbasen wie Kalium- und Natriumhydroxid, Natriumhydrogencarbonat, Natriumcarbonat, Kaliumcarbonat, Kaliumhydrogencarbonat, Erdalkalimetallbasen wie Calciumhydroxid, Calciumoxid, Magnesiumhydroxid oder Magnesiumcarbonat, Alkylamine, wie Ethylamin, Diethylamin, Trimethylamin, Triethylamin, Triisopropylamin und Mono-, Di- und Trialkanolamine wie Ethanolamin, Diethanolamin, Aminomethylpropanol, Aminomethylpropandiol und Trishydroxymethylaminomethan sowie Gemische davon.

Geeignete oberflächenaktive Substanzen sind die üblicherweise zur Herstellung wässriger Polymerdispersionen verwendeten Emulgatoren, Polymertenside und Schutzkolloide. Die Emulgatoren können amphoter, neutraler, anionischer oder kationischer Natur sein. Geeignete Emulgatoren sind dem Fachmann aus dem Stand der Technik bekannt, z.B. aus R. Heusch, "Emulsiones" in Ullmanns Encyclopedia of Industrial Chemistry, 5^{th} ed. on CD-Rom, Kapitel 7. Beispiele für nicht-ionische Emulgatoren sind alkoxylierte Fette und Öle, z. B. Maisölethoxylate, Rizinusölethoxylate, Talgfettethoxylate; Glycerinester, z. B. Glycerinmonostearat; Fettalkoholalkoxylate und Oxoalkoholalkoxylate; Alkylphenolalkoxylate, z. B. Isononylphenolethoxylate; und Zuckertenside, z. B. Sorbitanfettsäureester (Sorbitanmonooleat, Sorbitantristearat), Polyoxyethylensorbitanfettsäureester. Insbesondere verwendet man Fettalkoholethoxylate. Beispiele für geeignete anionische Emulgatoren sind Seifen, Alkansulfonate, Olefinsulfonate, Alkylarylsulfonate, Alkylnaphthalinsulfonate, Sulfosuccinate, Alkylsulfate und Alkylethersulfate, Alkylmethylestersulfonate sowie Gemische davon, vorzugsweise in Form der Natriumsalze. Beispiele für Polymertenside sind: Blockcopolymere wie Polyethylenoxid-blockpolypropylenoxid, Polystyrol-blockpolyethylenoxid, und AB-Kammpolymere, z.B. Polymethacryl-comb-polyethylenoxid und Copolymerisate von Acrylsäure und Maleinsäureanhydrid, insbesondere Copolymerisate von Acrylsäure und Maleinsäureanhydrid, vorzugsweise in neutralisierter Form, z. B. in Form der Natrium- oder der Ammoniumsalze. Geeignete Schutzkolloide sind beispielsweise Celluloseether, wie Carboxymethylcellulose, Methylcellulose, Hydroxyethylcellulose, Gummi arabicum, Polyvinylalkohole und Polyvinylpyrrolidon. Der Anteil an oberflächenaktiven Substanzen, bezogen auf das Gesamtgewicht der Polymerbestandteile der Beschichtung, liegt in der Regel im Bereich von 0 bis 10 Gew.-%, vorzugsweise 0,1 bis 5 Gew.-% bezogen auf das Gesamtgewicht der Zubereitung.

Geeignete Entschäumer sind beispielsweise höhere Alkohole, nichtionogene Acetylenverbindungen, aliphatische Kohlenwasserstoffe mit nichtionogenen Bestandteilen sowie Oligosiloxane.

Beispiele für Schaumbildner sind die Salze, insbesondere die Alkalimetall- und Ammoniumsalze von Alkylsulfaten und von Dialkylsulfobernsteinsäureestern. Beispiele für Schaumstabilisatoren sind insbesondere Fettsäuresalze.

Geeignete Verdicker sind neben den vorgenannten Schutzkolloiden auch Gummi arabicum, Gelatine, Caseine, Stärke, Alginate, Polyether, Cellulose-Derivate wie Methyl-, Carboxymethylcelluose oder Hydroxyethyl- u. Propylcellulose, Polyacrylsäure-Salze, wie das Natriumsalz oder das Ammoniumsalz der Polyacrylsäure, hydrophob modifizierte Polyurethane (Assoziativverdicker) sowie anorganische Verdickungsmittel wie Kieselsäure, sowie Gemische davon. Die Menge an Verdickungsmittel hängt naturgemäß von der gewünschten Rheologie der zur Beschichtung eingesetzten Beschichtungszusammensetzung ab und kann daher über einen weiten Bereich schwanken.

Erfindungsgemäß werden wässrige Zusammensetzungen eingesetzt, die das polymere Bindemittel und das Siliciumcarbid in einem wässrigen Dispergiermedium enthalten. Die Menge an Dispergiermedium wird in der Regel so bemessen, dass die resultierende wässrige Zusammensetzung einen Feststoffgehalt von 10 bis 80 Gew.-% und vorzugsweise etwa 20 bis 80 Gew.-% aufweist, wobei der Feststoffgehalt in an sich bekannter Weise von dem jeweiligen Beschichtungsverfahren abhängt.

Als wässriges Dispergiermedium kommen neben Wasser auch Mischungen, die wenigstens 50 Vol.-%, vorzugsweise wenigstens 80 Vol. -% Wasser und ein mit Wasser mischbares organisches Lösungsmittel enthalten. Geeignete Lösungsmittel umfassen Ketone wie Aceton und Methylethylketon, mit Wasser mischbare Ether wie Tetrahydrofuran, Dioxan, 1,2-Priopandiol-1-n-propylether, 1,2-Butandiol-1-methylether, Ethylenglykolmonomethylether, Diethylenglykolmonomethylether, Diethylenglykoldimethylether, Mono- oder Polyalkohole wie Methanol, Ethanol, n-Propanol, Isopropanol, Glykol, Glycerin, Propylenglykol oder Polyethylenglykol, sowie Gemische davon. Bevorzugt ist Wasser alleiniges Dispergiermedium (Wasseranteil > 95 Vol.-%).

Zur Herstellung der erfindungsgemäß verwendeten Zusammensetzungen wird man in der Regel eine wässrige Dispersion des bzw. der polymeren Bindemittel mit dem feinteiligen Siliciumcarbid-Pulver, gegebenenfalls unter Zusatz der oben angegebenen Hohlkugeln, Farbmittel, Hilfsmittel und Flammschutzmittel und gegebenenfalls weiterem Dispergiermedium vermischen. Häufig wird man zunächst eine wässrige Dispersion des polymeren Bindemittels, das Siliciumcarbid und gegebenenfalls Entschäumer und Verdicker enthält, durch vermischen der Bestandteile herstellen und das dabei erhaltene Compound vor dem Beschichten der Textilie, sofern erforderlich, mit den Farbmitteln, Flammschutzmitteln und den sonstigen Hilfsmitteln konfektionieren. Das Vermischen und Konfektionieren erfolgt in den hierfür üblichen Vorrichtungen, z.B. in Rührgefäßen oder einem Dissolver.

Die vorliegende Erfindung betrifft auch ein Verfahren zur Herstellung von Blackout-Textilien durch Herstellen einer Black-Out-Beschichtung auf einem konventionellen textilen Material und gegebenenfalls Konfektionieren des mit der Blackout-Beschichtung versehenen textilen Materials, das im Folgenden auch als textiler Träger bezeichnet wird, wobei das Herstellen der Black-Out-Beschichtung umfasst:
a) Beschichten eines konventionellen textilen Materials mit einer wässrigen Polymerzusammensetzung, enthaltend
i. wenigstens ein in wässriger Phase dispergiertes, filmbildendes polymeres Bindemittel, das zu wenigstens 30 Gew.-%, bezogen auf das Gesamtgewicht des Bindemittels, wenigstens eines Polyurethans umfasst, und
ii. ein feinteiliges Siliciumcarbid-Pulver in einer Menge von 10 bis 150 Gew.-Teile, bezogen auf das 100 Gew.-Teile des polymeren Bindemittels,
in einer Auflage von wenigstens 70 g/m², in der Regel 70 bis 200 g/m², vorzugsweise 80 bis 150 g/m² und insbesondere 100 bis 140 g/m², jeweils gerechnet als Trockenauflage, und b) Verfestigen der Beschichtung.

Als konventionelle textile Träger kommen grundsätzlich alle konventionellen textilen Materialien in Betracht, wie sie üblicherweise für die Herstellung von Black-Out-Textilien eingesetzt werden. In der Regel handelt es sich hierbei um Gewebe aus Naturfasergarnen, Synthesefasergarnen und/oder Mischgarnen, wobei die Gewebe üblicherweise ein Flächengewicht im Bereich von 50 bis 400 g/m² vorzugsweise 80 bis 250 g/m² aufweisen. Geeignet sind weiterhin Vliese. Als Fasermaterialien kommen grundsätzlich alle für die Herstellung von Textilien üblicherweise eingesetzten Fasermaterialien in Betracht. Hierzu zählen Baumwolle, Wolle, Hanffaser, Sisalfasern, Flachs, Ramie, Polyacrylnitrilfasern, Polyesterfasern, Polyamidfasern, Viskosefasern, Seide, Acetatfasern, Triacetatfasern, Aramidfasern und dergleichen sowie Mischungen dieser Fasermaterialien. Geeignet sind auch Glasfasern sowie Mischungen der vorgenannten Fasermaterialien mit Glasfasern z. B. Glasfaser/Kevlar-Mischungen.

Das Aufbringen der Beschichtungszusammensetzungen erfolgt auf die für das Beschichten von Textilien üblichen Verfahren, z.B. durch Drucken, Pflatschen oder Rakeln. Insbesondere können die Beschichtungszusammensetzungen nach Zusatz von Schaummitteln und gegebenenfalls Schaumstabilisatoren als Schaum oder nach Zusatz von Verdickungsmitteln als Paste aufgetragen werden, wobei der Schaumauftrag erfindungsgemäß besonders bevorzugt ist. Der Schaumauftrag erfolgt mit den hierfür üblichen Vorrichtungen und Verfahren, z.B. mittels Rotationsschablonen oder Rakeln. Bei pastenförmigen Zusammensetzungen erfolgt der Auftrag in der Regel durch Rakeln, z.B. mittels eines Luft-, Gummituch- oder Walzen-Rakel.

Die Aufbringen der Beschichtungszusammensetzung kann als Direktbeschichtung, d.h. das textile Flächengebilde wird direkt mit der Beschichtungszusammensetzung bestrichen, oder durch Umkehr- oder Transferbeschichtung erfolgen.

Sofern die Zusammensetzung als Schaum appliziert wird, enthält die Zusammensetzung vorzugsweise Schaumbildner bzw. Schaumgeber und gegebenenfalls Schaumstabilisatoren. Der Anteil an Schaumbildnern beträgt in der Regel 0,2 bis 10 Gew.-% und insbesondere 0,5 bis 5 Gew.-%, bezogen auf das Gesamtgewicht der Zusammensetzung. Der Anteil an Schaumstabilisatoren liegt in der Regel im Bereich von 1 bis 5 Gew.-% und insbesondere 2 bis 4 Gew.-%, bezogen auf das Gesamtgewicht der Zusammensetzung. Das Schaumgewicht liegt in der Regel im Bereich von 100 bis 500 g/l und insbesondere im Bereich von 150 bis 400 g/l.

Zum Verfestigen in Schritt b) des erfindungsgemäßen Verfahrens wird man nach dem Aufbringen der erfindungsgemäßen, wässrigen Beschichtungszusammensetzung zunächst das wässrige Dispergiermittel entfernen, d.h. die feuchte Beschichtung trocknen (Schritt b1) Das Trocknen erfolgt in der Regel unter Normaldruck bei Temperaturen oberhalb 50 °C, vorzugsweise im Bereich von etwa 70 bis 150 °C. Sofern ein vernetzbares Bindemittel eingesetzt wird erfolgt das Trocknen bei Temperaturen unterhalb der Vernetzungstemperatur. Die Vernetzungstemperatur ist die Temperatur, oberhalb derer die chemische Reaktion der vernetzbaren Gruppen unter Bindungsbildung in einer für übliche Verarbeitungsgeschwindigkeiten von Textilien (üblicherweise > 5 m/min) ausreichenden Geschwindigkeit abläuft. Die Vernetzungstemperatur kann der Fachmann anhand einfacher Experimente bestimmen oder den Herstellerangaben für das Bindemittel entnehmen. Die Vernetzungstemperatur bevorzugter Polymere wird in der Regel oberhalb 140 °C und insbesondere oberhalb 150 °C liegen z.B. im Bereich von 160 °C bis 220 °C. Der Trockenvorgang nimmt in der Regel wenige Sekunden bis mehrere Minuten z.B. 20 Sekunden bis 5 Minuten in Anspruch, aber auch längere Trocknungszeiten sind möglich. Bevorzugt ist eine progressive Trocknung, d.h. die Trocknungstemperatur wird im Verlauf der Trocknung gesteigert, z.B. von einem Anfangswert von 50-80 °C auf einen Endwert von 120-150 °C. Auf diese Weise werden besonders gute Beschichtungsqualitäten erhalten.

Beim Schaumauftrag wird in der Regel nach dem Trocknen der wässrigen Zusammensetzung die in Schritt a) erhaltene getrocknete Schaumschicht gecrasht (Schritt b2). Das Crashen des Schaums erfolgt in der Regel durch Verpressen des mit dem Schaum beschichteten textilen Trägers bei einem Druck von wenigstens 2 bar, z.B. 2 bis 20 bar und vorzugsweise wenigstens 5 bar, z.B. 5 bis 15 bar. Vorzugsweise erfolgt das Auftragen, Trocknen und Verpressen in Linie, d. h. nacheinander in einem Gesamtvorgang.

Anschließend wird man das dabei erhaltene beschichtete Textilie vorzugsweise kalandrieren, um eine hinreichende Festigkeit der Beschichtung zu erhalten. Das Kalandrieren erfolgt in an sich bekannter Weise bei einem Walzendruck von wenigstens 5 bar, vorzugsweise wenigstens 10 tonnen, z.B. 10 bis 25 tonnen und Temperaturen im Bereich von vorzugsweise 25 bis 150°C. Sofern im Anschluss an das Aufbringen der Beschichtung ein Verpressen (vorzugsweise ein Verpressen in Linie) erfolgt, ist eine Kalandriepassage zur Erreichung des erfindungsgemäßem Erfolgs nicht erforderlich aber von Vorteil.

Sofern das Bindemittel ein vernetzbares oder selbstvernetzendes Bindemittelpolymer enthält, umfasst der Schritt b) des erfindungsgemäßen Verfahrens auch das Härten der Beschichtung (Schritt b4). Das Härten der Beschichtung, das auch als Kondensationsschritt bzw. Kondensieren bezeichnet wird, erfolgt naturgemäß oberhalb der Vernetzungstemperatur des polymeren Bindemittels. Die Kondensationsdauer liegt üblicherweise im Bereich von 1 min. bis 5 min.

Das erfindungsgemäße Verfahren kann als 1-Strich-Verfahren durchgeführt werden, d.h. die erfindungsgemäße Zusammensetzung wird in Schritt a) des erfindungsgemäßen Verfahrens in der gewünschten Menge aufgebracht und anschließend in Schritt b) zu der Black-Out-Beschichtung verfestigt. Die auf diese Weise erreichte Lichtdichtigkeit der Textilie ist für die meisten Anwendungszwecke bereits ausreichend.

Für besonders gute Beschichtungsqualitäten empfiehlt es sich, die Black-Out-Beschichtung in zwei aufeinanderfolgenden Strichen aufzubringen. Im ersten Strich wird man dann in der Regel die erfindungsgemäße Zusammensetzung in einer Menge von 30 bis 100 g/m² Trockenauflage aufbringen. Im zweiten Strich wird dann die erfindungsgemäße Zusammensetzung in einer Menge aufgebracht, dass die gewünschte Gesamtauflage von wenigstens 70 g/m², z. B. 70 bis 200 g/m², vorzugsweise 80 bis 150 g/m² insbesondere 100 bis 140 g/m² (gerechnet als Trockenauflage) resultiert. Das Applizieren des ersten Strichs erfolgt in der oben beschriebenen Weise. Das Applizieren des zweiten Strichs erfolgt in gleicher Weise. Vor der Applikation des zweiten Strichs wird man den ersten Strich in der Regel trocknen und gegebenenfalls verpressen nicht jedoch kalandrieren. Im Anschluss an das Aufbringen des zweiten Strichs wird das beschichtete Gewebe dann erneut in der oben beschriebenen Weise getrocknet, gegebenenfalls verpresst und dann kalandriert und gegebenenfalls zum Vernetzen des Polyumerbindemittels kondensiert.

Ferner hat es sich bewährt, die Black-Out-Textilien mit einer Oleophob-Ausrüstung zu versehen. Hierzu kann man die beschichtete Textilie, vorzugsweise jedoch den noch nicht beschichteten textilen Träger mit einer handelsüblichen Hydrophobiermittel imprägnieren (Übersicht zu Oleophob-Ausrüstungen siehe Ullmanns Enzyclopedia of Industrial Chemistry 5th ed. on CD-ROM, Textile Auxiliaries 6.2.5 und M. Lewin et al. "Handbook of Fiber Science and Technology", Vol. 2, Marcel Dekker, New York 1984, S. 144-204). Als Imprägniermittel eignen sich insbesondere Fluorcarbonharzemulsionen (siehe z.B. R. Kleber, TPI Text. Prax. Int. 27 1972, S. 499-503, D. Lämmermann, Melliand Textilber 74, 1993 S. 883-889). Bei den Fluorcarbonharzen handelt es sich insbesondere um fluororganische Polymere oder um deren Abmischungen mit Waxen oder Paraffinen, die einen Fluoranteil im Bereich von 1 bis 20 Gew.-% aufweisen. Die Fluorcarbonharz-Emulsionen sind üblicherweise als wässrige Emulsionen oder als Emulsionen in Wasser/Essigsäure-Mischungen erhältlich, z.B. unter den Handelsbezeichnungen Dipolit ® 480 (Firma Rotta GmbH, Mannheim) vertrieben wird.

Die auf diese Weise erhaltenen beschichteten Textilien sind neu und ebenfalls Gegenstand der vorliegenden Erfindung. Der Anteil an 2. Wahl ist deutlich geringer (in der Regel < 5 %) als bei Textilien, die nach dem konventionellen Verfahren für Black-Out-Beschichtungen erhalten werden. Die erhaltenen beschichteten Textilien können anschließend in der gewünschten Weise konfektioniert werden, z.B. als Vorhänge, als Rollos oder Lamellen.

Die folgenden Beispiele sollen die Erfindung verdeutlichen. Die Erfindung ist jedoch nicht auf die Beispiele beschränkt.

### I. Herstellung der Zusammensetzung:

### I.1 Herstellung eines SiC-haltigen Polyurethan-Compounds

### Zusammensetzung 1

87,4 Gew.-Teile einer handelsüblichen, wässrigen aliphatischen Polyesterurethan-Dispersion (anionenaktiv, frei OH-Gruppen, 40 gew. -%ig) mit einer Glasübergangstemperatur < 0°C, 1 Gew. -Teil eines handelsüblichen Talgfettethoxylats, 1 Gew.-Teil eines handelsüblichen Silikonentschäumers, 10 Gew.-Teilen eines handelsüblichen Siliciumcarbids mit einer BET-Oberfläche von 15 m²/g und 0,6 Gew.-Teile eines handelsüblichen Verdickers auf Basis eines Polyacrylsäure-Ammoniumsalzes wurden in der vorstehend genannten Reihenfolge unter Rühren vermischt. Die erhaltene Zusammensetzung wies eine Viskosität (nach Haake) von 2500 + 500 mPas auf.

### Vergleichszusammensetzung V1

Man stellte eine Beschichtungszusammensetzung analog Zusammensetzung 1 her jedoch ohne Siliciumcarbid

### Zusammensetzung 2

56,5 Gew.-Teile einer handelsüblichen, wässrigen aliphatischen Polyesterurethan-Dispersion (anionenaktiv, frei Hydroxylgruppen 50 gew.%ig), 10 Gew.-Teile Wasser, 2 Gew.-Teile eines handelsüblichen Sorbitanfettsäureesters, 1 Gew.-Teil eines handelsüblichen Silikonentschäumers, 30 Gew.-Teile eines handelsüblichen Siliciumcarbids mit einer BET-Oberfläche von 10 m²/g und 0,5 Gew.-Teile eines handelsüblichen Verdickers auf Basis eines Polyacrylsäure-Ammoniumsalzes wurden in der vorstehend genannten Reihenfolge unter Rühren vermischt. Die Zusammensetzung wies eine Viskosität (nach Haake) von 2500 ± 500 mPas auf.

### Vergleichszusammensetzung V2

Man stellte eine Beschichtungszusammensetzung wie in Beispiel 2 beschrieben, jedoch ohne Siliciumcarbid

### Zusammensetzung 3

Die Zusammensetzung entspricht im wesentlichen Zusammensetzung 1, wobei jedoch 52 Gew.-Teile der Polyurethan-Dispersion durch 52 Gew.-Teile einer 45 Gew.-%igen Polyacrylat-Dispersion auf Basis von 2-Ethylhexylacrylat mit einer Glasübergangstemperatur von etwa 0°C ersetzt wurden.

### I.2 Konfektionieren der SiC-haltigen Polyurethan-Compounds

### I.2.1 Herstellung einer Schaumformulierung (ohne Flammschutz)

83 Gew.-Teile der Zusammensetzung 1, 2, 3, V1 oder V2 wurden mit 7 Gew.-Teilen einer wässrigen Ammoniumstearat-Dispersion als Schaumstabilisator (35 gew.-%ig: 1,5 Gew.-Teile einer wässrigen Lösung (50 Gew.-%ig) Dioctylsulfobernsteinsäure Natriumsalzes als Schaumgeber sowie 2 Gew.-Teile einer wässrigen 40 Gew.-%igen Dispersion eines Polyisocyanat-Vernetzers (Rottal ® 444 der Rotta GmbH, Mannheim) wurden zunächst nacheinander in der angegebenen Reihenfolge in einem Dissolver vermischt. Die erhaltene Zusammensetzung wies eine Viskosität (nach Haake VT 02) von 2500 + 500 mPas auf. Die Schaumformulierung wird unmittelbar vor ihrer Anwendung in einem Mixer zu einem Schaum aufgeschlagen.

### I . 2 . 2 Herstellung einer Schaumformulierung (mit Flammschutz)

73 Gew.-Teile der Zusammensetzung 1, 2, 3, V1 oder V2 wurden mit 10 Gew.-Teilen einer wässrigen Dispersion von mikroverkapseltem rotem Phosphor (50 gew.-%ig: Flammschutz 97430 der Rotta GmbH Mannheim), 7 Gew.-Teilen einer wässrigen Ammoniumstearat-Dispersion als Schaumstabilisator (50 gew.-%ig) 1,5 Gew.-Teile einer 50 Gew. -%igen wässrigen Lösung des Dioctylsulfobernsteinsäure Natriumsalzes als Schaumgeber sowie 2 Gew.-Teile einer wässrigen 40Gew.-%igen Dispersion Polyisocyanat-Vernetzers (Rottal ® 444 der Rotta GmbH, Mannheim) wurden zunächst nacheinander in der angegebenen Reihenfolge in einem Dissolver vermischt. Die erhaltene Zusammensetzung wies eine Viskosität (nach Haake VT 02) von 2500 + 500 mPas auf. Die Schaumformulierung wird unmittelbar vor ihrer Anwendung in einem Mixer zu einem Schaum aufgeschlagen.

### I . 2 . 3 Herstellung einer pigmenthaltigen Schaumformulierung

Die Herstellung und Zusammensetzung entspricht der Schaumformulierung I.2.1 mit dem Unterschied, dass zusätzlich 10 Gew.-Teile Titandioxid vor der Zugabe des Schaumstabilisators zugegeben werden.

### I. 2. 4 Herstellung einer Paste (ohne Flammschutz)

95 Gew.-Teile der Zusammensetzung 1 bzw. 2, V1 oder V2 wurden mit 1 Gew.-Teilen einer wässrigen Dispersion von Mineral-Ölen (100 gew.-%ig: Ro Ma Defoamer 167 der Rotta GmbH, Mannheim) und 4 Gew.-Teile eines handelsüblichen Verdickers auf Basis eines Polyacrylsäure-Ammoniumsalzes (25 gew.-%ig) und 2 Gew.-Teile einer wässrigen 40 Gew.%igen Dispersion eines Polyisocyanat-Vernetzers (Rottal® 444 der Rotta GmbH, Mannheim) wurden nacheinander in der angegebenen Reihenfolge in einem Dissolver vermischt. Die erhaltene Zusammensetzung wies eine Viskosität (nach Haake VT 02) von 2500 + 500 mPas auf.

### I. 2. 5 Herstellung einer Paste (mit Flammschutz)

85 Gew.-Teile der Zusammensetzung 1 bzw. 2, V1 oder V2 wurden mit 10 Gew.-Teilen einer wässrigen Dispersion von mikroverkapseltem rotem Phosphor (50 gew.-%ig: Flammschutz 97430 der Rotta GmbH Mannheim), 1 Gew.-Teil einer wässrigen Dispersion von Mineral-Ölen (100 gew.-%ig: Ro Ma Defoamer 167 der Rotta GmbH, Mannheim), 4 Gew.-Teile eines handelsüblichen Verdickers auf Basis eines Polyacrylsäure-Salzes (25 gew.-%ig: Rottal ® Coating 94511 der Rotta GmbH, Mannheim) und 2 Gew.-Teile einer wässrigen 40 Gew.-%igen Dispersion eines Polyisocyanat-Vernetzers (Rotta ® 444 der Rotta GmbH, Mannheim) wurden nacheinander in der angegebenen Reihenfolge in einem Dissolver vermischt. Die erhaltene Zusammensetzung wies eine Viskosität (nach Haake VT 02) von 2500 + 500 mPas auf.

### II Herstellung der Black-Out-Beschichtung

Als textiler Träger diente ein Aramid-Gewebe mit einem Flächengewicht 150 g/m², das mit einer wässrigen Flotte, enthaltend 1 g/l Essigsäure und 20 g/l einer wässrigen Fluorcarbonharzemulsion (20 gew. -%ig: Dipolit ® 480 der Fa. Rotta GmbH, Mannheim) imprägniert war.

### II. 1 Allgemeine Vorschrift für den Schaumauftrag (1 Strich)

a) Die jeweilige Schaumformulierung wurde zunächst zu einem Schaum mit einem Litergewicht von 200 bis 220 g/l aufgeschlagen. In einer Beschichtungsanlage, umfassend eine Rotationsschablone mit einem Spannrahmen von 4 Feldern ä 3 m und einem sich daran anschließenden Presswerk (Arbeitsdruck von 9 bar) wurde der Schaum mittels der Rotationsschablone auf den textilen Träger aufgebracht, auf den Spannrahmen progressiv mit einer Geschwindigkeit von 10 m/min (Verweilzeit 72 sec) bei einer Anfangstemperatur von 80 °C und einer Endtemperatur von 140 °C getrocknet und in Linie durch das Presswerk geführt. Der Auftrag erfolgte in einer Menge, dass eine trockene Beschichtung in einer Auflage von 100 g/m² resultierte.
b) Anschliessend führte man das so erhaltene Gewebe mit einer Geschwindigkeit von 10 m/min durch einen Kalander (T = 25 bis 100°C, Arbeitsdruck 12 Tonnen). Danach wurde das kalandrierte Gewebe zur Kondensation durch eine Heizzone von 160-170°C mit einer Verweilzeit von 120 sec geleitet.

### II. 2 Allgemeine Vorschrift für den Schaumauftrag (2 Strich)

In einer Beschichtungsanlage wurde in der für die 1-Strich-Beschichtung oben unter II. 1 a) beschriebenen Weise ein erster Strich in einer Trockenauflage von 60 g/m² aufgebracht. Anschließend wurde dieser Vorgang zum Aufbringen des zweiten Strichs wiederholt. Die Gesamtauflage betrug 120 g/m² (Trockenauflage). Anschließend wurde das so erhaltene Gewebe kalandriert und kondensiert wie unter II. 2 b) beschrieben.

### II. 3 Allgemeine Vorschrift für den Pastenauftrag (1 Strich)

a) Die Paste wurde zunächst über ein 40 mesh-Sieb filtriert und anschließend auf die für den Schaumauftrag beschriebene Weise auf den textilen Träger aufgebracht, mit dem Unterschied, dass die Beschichtungsanlage anstelle der Rotationsschablone ein Walzenrakel aufwies. Die resultierende Trockenauflage betrug 100 g/m².
b) Anschliessend führte man das so erhaltene Gewebe mit einer Geschwindigkeit von 10 m/min durch einen Kalander (T = 25 bis 100°C, Arbeitsdruck 10 Tonnen). Danach wurde das kalandrierte Gewebe zur Kondensation durch eine Heizzone von 160 - 170°C mit einer Verweilzeit von 120 sec geführt.

### III. Prüfung der Lichtundurchlässigkeit:

Zur Prüfung der Lichtundurchlässigkeit hielt man einen Halogenstrahler mit einer stabförmigen Halogenleuchte (500W, 220 V), mit Reflektor (16cm x 13cm) und Glasschutzscheibe (Typ IP 54) gegen die unbeschichtete Seite des Gewebes. Von einer Testperson wurde visuell beurteilt, ob leuchtende Punkte zu erkennen waren. Das Gewebe hat den Test dann bestanden, wenn keine leuchtende Punkte zu erkennen waren. Die Ergebnisse sind in Tabelle 1 zusammengestellt.

**Tabelle 1**

| Beispiel | Zusammensetzung | Formulierung | Herstellungsverfahren | Prüfung |
|---|---|---|---|---|
| 1 | 1 | I.2.1 | II.1 | + |
| 2 | 1 | I.2.2 | II.1 | + |
| 3 | 1 | I.2.3 | II.1 | + |
| 4 | 1 | I.2.4 | II.3 | + |
| 5 | 2 | I.2.1 | II.1 | + |
| 6 | 2 | I.2.2 | II.1 | + |
| 7 | 2 | I.2.4 | II.3 | + |
| 8 | 2 | I.2.5 | II.3 | + |
| 9 | 3 | I.2.1 | II.1 | + |
| 10 | 3 | I.2.3 | II.1 | + |
| V 1 | V 1 | I.2.1 | II.1 | - |
| V 2 | V 1 | I.2.4 | II.3 | - |
| V 3 | V 2 | I.2.1 | II.1 | - |
| V 4 | V 2 | I.2.4 | II.3 | - |
| 11 | 1 | I.2.1 | II.2 | + |
| 12 | 2 | I.2.1 | II.2 | + |
| 13 | 3 | I.2.1 | II.2 | + |
| 14 | 2 | I.2.3 | II.2 | + |
| V 5 | V 1 | I.2.1 | II.2 | - |
| V 6 | V 2 | I.2.1 | II.2 | - |

| | | | | |
|---|---|---|---|---|
| + = bestanden | | | | |
| - = nicht bestanden | | | | |

## Patentansprüche

1. Verwendung von wässrigen, Keramik-gefüllten Polymerzusammensetzungen, enthaltend:
i. wenigstens ein in wässriger Phase dispergiertes, filmbildendes polymeres Bindemittel, das zu wenigstens 30 Gew.-%, bezogen auf das Gesamtgewicht des Bindemittels, wenigstens eines Polyurethans umfasst, und
ii. als Keramik-Bestandteil ein feinteiliges Siliciumcarbid-Pulver in einer Menge von 20 bis 150 Gew.-Teile, bezogen auf 100 Gew.-Teile des polymeren Bindemittels,
zur Herstellung von Black-Out-Beschichtungen auf konventionellen textilen Materialien.

2. Verwendung nach Anspruch 1, wobei wenigstens 90 Gew.-% des Siliciumcarbids Teilchengrößen im Bereich 0,5 bis 20 µm aufweist.

3. Verwendung nach Anspruch 1, wobei das Siliciumcarbid eine BET-Oberfläche (nach DIN 66131) im Bereich von 1 bis 50 m²/g aufweist.

4. Verwendung nach einem der vorhergehenden Ansprüche, wobei das Polyurethan eine Glasübergangstemperatur im Bereich von -30 bis +60°C aufweist.

5. Verwendung nach einem der vorhergehenden Ansprüche, wobei das Bindemittel ein selbstvernetzendes Polyurethan oder ein vernetzbares Polyurethan und ein Vernetzungsmittel umfasst.

6. Verwendung der Polymerzusammensetzung nach einem der vorhergehenden Ansprüche in einer Trockenauflage von 70 bis 200 g/m².

7. Verwendung nach einem der vorhergehenden Ansprüche, wobei die wässrige Polymerzusammensetzung 1 bis 50 Gew.-%, bezogen auf das Siliziumcarbid, feinteilige Glaskugeln enthält.

8. Verwendung nach einer der vorhergehenden Ansprüche, wobei das polymere Bindemittel 30 bis 80 Gew.-% Polyurethan und 20 bis 70 Gew.-% eines polymeren Cobindemittels in Form eines wässrigen Polymerlatex aus Basis ethylenisch ungesättigter Monomere enthält.

9. Verwendung nach einem der vorhergehenden Ansprüche, wobei die wässrige Polymerzusammensetzung zusätzlich wenigstens ein Flammschutzmittel enthält.

10. Verfahren zur Herstellung von Blackout-Textilien durch Herstellen einer Black-Out-Beschichtung auf einem textilen Material und gegebenenfalls Konfektionieren des textilen Materials, wobei das Herstellen der Black-Out-Beschichtung umfasst:
a) Beschichten eines konventionellen textilen Materials mit einer wässrigen Polymerzusammensetzung, enthaltend
i. wenigstens ein in wässriger Phase dispergiertes, filmbildendes polymeres Bindemittel, das zu wenigstens 30 Gew.-%, bezogen auf das Gesamtgewicht des Bindemittels, wenigstens eines Polyurethans umfasst, und
ii. ein feinteiliges Siliciumcarbid-Pulver in einer Menge von 20 bis 150 Gew.-Teile, bezogen auf das 100 Gew.-Teile des polymeren Bindemittels,
in einer Auflage von wenigstens 70 g/m², gerechnet als Trockenauflage, und b) Verfestigen der Beschichtung.

11. Verfahren nach Anspruch 10, wobei in Schritt i) die wässrige Polymerzusammensetzung in Form eines Schaums auf die konventionelle Textilie appliziert wird.

12. Verfahren nach Anspruch 10 oder 11, wobei das Herstellen der Black-Out-Beschichtung in einem Strich erfolgt.

13. Verfahren nach Anspruch 10 oder 11, wobei das Herstellen der Black-Out-Beschichtung in zwei Strichen erfolgt.

14. Verfahren nach einem der Ansprüche 10 bis 13, wobei das Bindemittel ein selbstvernetzendes Polyurethan oder ein vernetzbares Polyurethan und ein Vernetzungsmittel umfasst.

15. Verfahren nach Anspruch 14 wobei das Verfestigen b) die aufeinanderfolgenden Schritte umfasst:
b1) Trocknen der in Schritt a) beschichteten Textilie bei erhöhter Temperatur unterhalb der Vernetzungstemperatur des Bindemittels;
b2) Verpressen der nach Schritt b1) erhaltenen beschichteten Textilie;
b3) gegebenenfalls Kalandrieren der beschichteten Textilie; und
b4) Kondensation der Beschichtung bei einer Temperatur oberhalb der Vernetzungstemperatur.

16. Blackout-Textilie, erhältlich nach einem Verfahren gemäß einem der Ansprüche 10 bis 15.
